# EUROPEAN PATENT APPLICATION

(11) **EP 4 712 228 A1**
(43) Date of publication of application: **18.03.2026**
(21) Application number: 25190619.4
(22) Date of filing: 21.07.2025
(51) Int. Cl.: H01M 50/204, H01M 50/333, H01M 50/383

(54) **ENERGY STORAGE SYSTEM**

(30) Priority: 30.08.2024 KR 20240117929
(71) Applicant: SAMSUNG SDI CO., LTD., Yongin-si, Gyeonggi-do 17084 (KR)
(72) Inventor: YOON, Jongwook, 17084 Yongin-si (KR)
(74) Representative: Marks & Clerk LLP

(57) **Abstract**

An energy storage system (ESS) includes a container to accommodate a plurality of battery modules, and an explosion-proof panel (200) arranged on one surface of the container (100) to seal the container. The explosion-proof panel (200) includes a gas tank (300) to release inert gas into the container when a pressure inside the container is lower than a pressure outside the container.

## Description

### FIELD

The disclosure relates to an energy storage system.

### BACKGROUND

An energy storage system (ESS) is a system that is capable of storing surplus electricity or electricity produced by using renewable energy. An ESS may be used to control efficient power supply and demand by storing idle power at the time of low electricity demand and supplying electricity at the time of high electricity demand.

A space or a facility where an ESS is installed and operated may be provided with equipment for suppressing battery fires in the event of fires caused by electric shock, short circuits, external surges, etc.

### SUMMARY

According to some embodiments, an energy storage system (ESS) is provided to suppress and extinguish a fire.

However, aspects and features of the disclosure are not limited to those described below, and other aspects and features not mentioned will be clearly understood by those of ordinary skill in the art from the detailed description.

According to some embodiments, an ESS includes a container to accommodate a plurality of battery modules, and an explosion-proof panel arranged on one surface of the container to seal the container. The explosion-proof panel may include a gas tank to release inert gas into the container when a pressure inside the container is lower than a pressure outside the container.

The gas tank may include a vent portion to operate when the pressure inside the container is lower than the pressure outside the container and a tank portion configured to store the inert gas.

The vent portion may include a rupture membrane connected to an inside of the container and a frame portion located between the tank portion and the rupture membrane.

The frame portion may include a frame forming a grid pattern between the tank portion and the rupture membrane so that a rupture direction of the rupture membrane when the rupture membrane ruptures does not face the tank portion.

The explosion-proof panel may be opened or closed according to the pressure inside the container.

The explosion-proof panel may be opened when the pressure inside the container is higher than the pressure outside the container.

The explosion-proof panel may further include a cover portion and a spring portion, and the spring portion may connect the container to the cover portion.

The gas tank may be arranged on a bottom surface of the cover portion.

The explosion-proof panel may further include a wall portion connected to the spring portion, and the wall portion may surround the gas tank.

The inert gas may include nitrogen.

According to some embodiments, an ESS) includes a container configured to accommodate a plurality of battery modules, and an explosion-proof panel arranged on one surface of the container. The explosion-proof panel includes a cover portion, a spring portion arranged at an edge of the cover portion, and a gas tank arranged on a bottom surface of the cover portion.

The gas tank may release inert gas into the container.

The gas tank may release the inert gas when a pressure inside the container is lower than a pressure outside the container.

The gas tank may include a vent portion to operate when the pressure inside the container is lower than the pressure outside the container and a tank portion configured to store the inert gas.

The vent portion may include a rupture membrane connected to an inside of the container and a frame portion located between the tank portion and the rupture membrane.

The frame portion may include a frame forming a grid pattern between the tank portion and the rupture membrane so that a rupture direction of the rupture membrane when the rupture membrane ruptures does not face the tank portion.

The explosion-proof panel may be opened or closed according to the pressure inside the container.

The explosion-proof panel may be opened when the pressure inside the container is higher than the pressure outside the container.

The explosion-proof panel may further include a wall portion connected to the gas tank, and the spring portion may connect the wall portion and the cover portion to the container.

The inert gas may include nitrogen.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a perspective view illustrating an example energy storage system (ESS) according to some embodiments;
FIG. 2 is a perspective view illustrating an example battery cell in the ESS of FIG. 1;
FIG. 3 is a perspective view illustrating an example battery module in the ESS of FIG. 1;
FIG. 4 is a perspective view illustrating a portion of the battery module of FIG. 3;
FIG. 5 is a cross-sectional view of a cross-section taken along I-I', indicated in FIG. 1;
FIG. 6 is a perspective view illustrating an example explosion-proof panel according to some embodiments;
FIG. 7 is a perspective view illustrating the explosion-proof panel of FIG. 6 when viewed from a different direction;
FIG. 8 is an enlarged view of cross-sectional area A, indicated in FIG. 5;
FIG. 9 is an exploded perspective view of an example vent portion according to some embodiments; and
FIG. 10 is a cross-sectional view of a cross-section taken along I-I', indicated in FIG. 1, at an early stage of a fire in the ESS.

### DETAILED DESCRIPTION

Hereinafter, embodiments will be described fully with reference to the accompanying drawings. When describing embodiments with reference to the drawings, the same or corresponding elements are denoted by the same reference numerals. As those skilled in the art would realize, the described embodiments may be modified in various different ways, all without departing from the disclosure or scope of the claims. The drawings and description are to be regarded as illustrative in nature and not restrictive.

As the energy density of batteries continuously increases, amounts of flames and ejection pressure in vents of battery cells increase, and thus, fires may not be early extinguished or suppressed with general fire suppression facilities. Accordingly, described herein are embodiments of fire extinguishing systems that may effectively suppress a plurality of battery fires and early extinguish high-pressure fires, in energy storage systems.

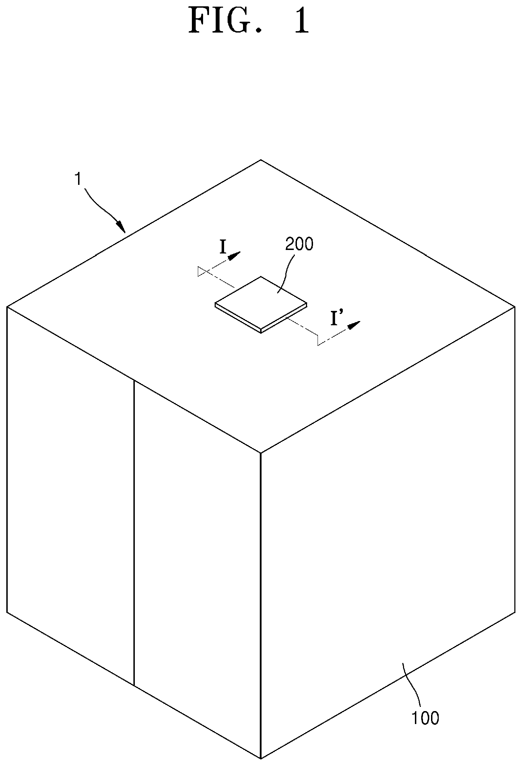

FIG. 1 is a perspective view illustrating an example energy storage system (ESS) 1 according to some embodiments.

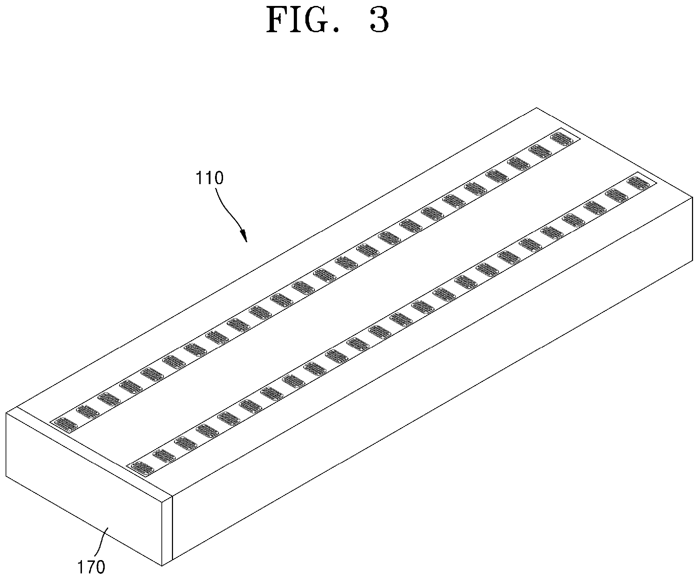

The ESS 1 is a system that is capable of producing and storing electricity and may supply electricity and control efficient power supply and demand. The ESS 1 includes a plurality of battery modules (110 in FIG. 3) each including a plurality of batteries, and thus, the ESS 1 is susceptible to fire and vulnerable to fire.

Referring to FIG. 1, the ESS 1 having a fire extinguishing system may include a container 100 that accommodates the battery modules 110. An explosion-proof panel 200 that is formed in a portion of the container 100 is opened or closed according to the pressure difference inside and outside the container 100, and releases inert gas into the container 100.

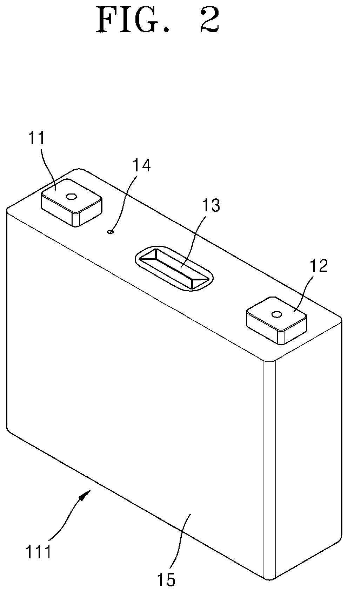

The battery modules 110 may be included in the container 100. Each of the battery modules 110 may include a plurality of battery cells 111 (FIG. 2). Each of the battery cells 111 may include a secondary battery capable of charging and discharging.

FIG. 2 is a perspective view illustrating an example battery cell 111 in the ESS of FIG. 1.

Referring to FIG. 2, the battery cell 111 according to the example embodiment may include a battery case 15 and an electrode assembly and an electrolyte housed in the battery case 15. The electrode assembly and the electrolyte react electrochemically to generate energy. Terminal portions 11 and 12, a vent 13 that is a passage for discharging internally generated gas, and an electrolyte injection port 14 for injecting the electrolyte into the battery case 15 may be provided at one side of the battery cell 111. The terminal portions 11 and 12 of the battery cell 111 may be respectively a positive terminal 11 and a negative terminal 12 having different polarities. The terminal portions 11 and 12 of the adjacent battery cells 111 may be electrically connected in series or in parallel by a connecting tab.

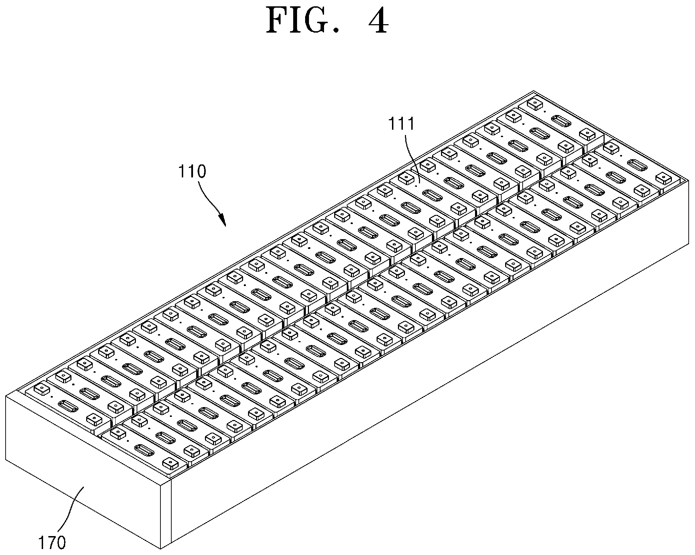

FIG. 3 is a perspective view illustrating an example battery module 110 in the ESS of FIG. 1, and FIG. 4 is a perspective view illustrating a portion of the battery module 110 of FIG. 3.

The container 100 of the ESS 1 according to an embodiment may accommodate a plurality of battery modules 110. Referring to FIGS. 3 and 4, each of the battery modules 110 may include a plurality of battery cells 111 arranged in one direction and a housing that accommodates the battery cells 111.

The battery cells 111 may be arranged in one direction so that the wide surfaces of the battery cells 111 face each other, and the arranged battery cells 111 may be fixed by the housing. The housing may include a pair of end plates 170 facing the wide surfaces of the battery cells 111, and a side plate, a bottom plate, and a top plate connecting the pair of end plates 170 to each other. The side plate may support the side surface of the battery cell 111, the bottom plate may support the bottom surface of the battery cell 111, and the top plate may support the top surface of the battery cell 111. In addition, the pair of end plates 170, the side plate, the bottom plate, and the top plate may be connected to each other by members such as bolts. The number and arrangement of battery cells 111 are not limited to the example structure illustrated in FIG. 4 and may be changed as necessary.

The battery modules 110 may be accommodated in the container 100. The battery modules 110 may be stacked in one direction, for example, in a vertical direction. The battery modules 110 may be connected in series, in parallel, or in series-parallel to produce a set output.

Each of the battery modules 110 may include the battery cells 111 arranged in one direction. As an example, the battery cells 111 may be arranged in one or more rows within the battery module 110. The battery cells 111 may be electrically connected to each other and may be connected in various manners, for example, in series, in parallel, or in series-parallel.

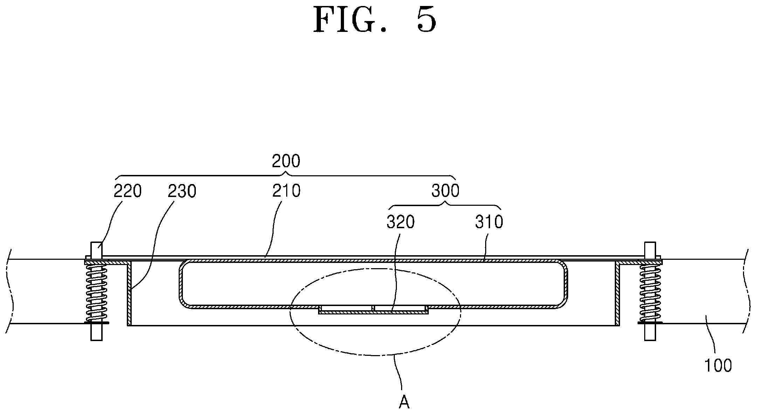

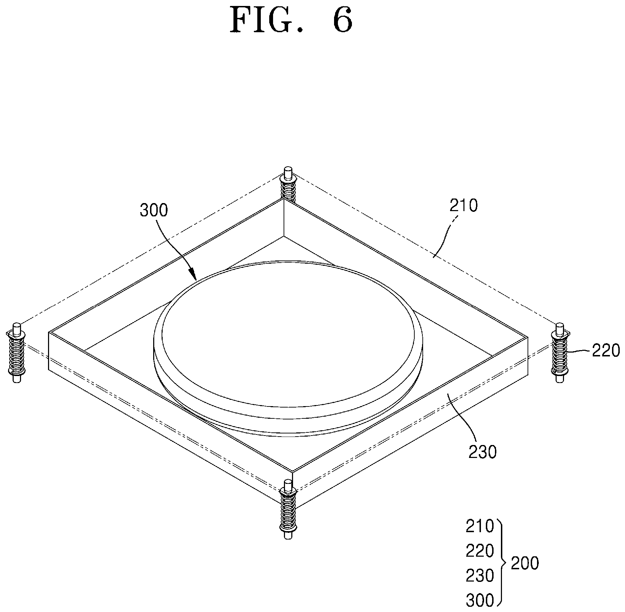

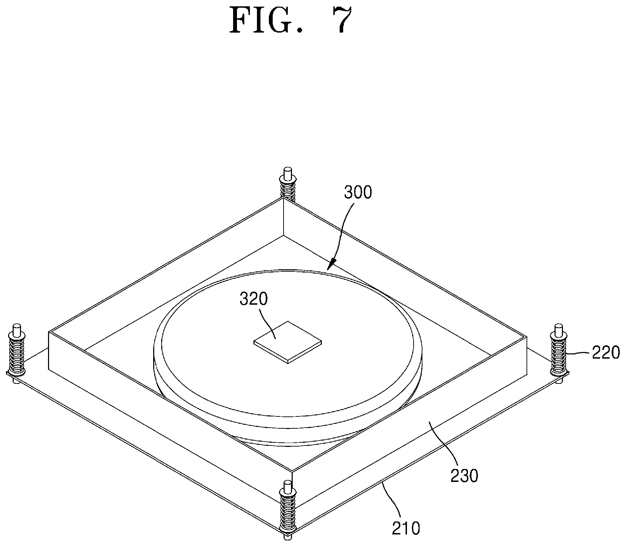

FIG. 5 is a cross-sectional view of a cross-section taken along I-I', indicated in FIG. 1, FIG. 6 is a perspective view illustrating an example explosion-proof panel according to some embodiments, and FIG. 7 is a perspective view illustrating the explosion-proof panel of FIG. 6 when viewed from a different direction.

The explosion-proof panel 200 may be formed on one surface of the container 100 and seal the container 100. As an example, the explosion-proof panel 200 may be formed in one region of the top surface of the container 100.

The explosion-proof panel 200 may be opened or closed according to the pressure inside the container 100.

The explosion-proof panel 200 may discharge gas inside the container 100 when the pressure inside the container 100 is higher than the pressure outside the container 100. This may prevent or mitigate explosion of the container 100.

The explosion-proof panel 200 may release inert gas into the container 100 when the pressure inside the container 100 is lower than the pressure outside the container 100. This makes it possible to prevent or delay secondary accidents from occurring due to rapid inflow of oxygen when the container 100 is damaged by negative pressure.

The explosion-proof panel 200 may include a cover portion 210 that may block the inside and outside of the container 100, a spring portion 220 that may open or close the cover portion 210 (or may allow the cover portion 210 to open or close), and a gas tank 300 that may release inert gas into the container 100. In an alternative embodiment, the explosion-proof panel 200 may further include a wall portion 230 that protects the gas tank 300.

The cover portion 210 is a thin plate that may block the inside and outside of the container 100 by closing an opening through which gas inside the container 100 is discharged. The cover portion 210 may be connected to the spring portion 220 and may be normally in contact with a portion of the outer surface of the container 100 to block the flow of air inside and outside the container 100.

The cover portion 210 is a thin plate and may have various shapes. As an example, the cover portion 210 may have a quadrilateral shape, particularly a square or rectangular shape. As another example, the cover portion 210 may have a circular or oval shape.

When gas is generated due to an occurrence of an event such as a fire in the battery cell 111 inside the container 100 and thus the pressure inside the container 100 becomes higher than the pressure outside the container 100, the explosion-proof panel 200 may be opened so that the gas inside the container 100 is discharged to the outside of the container 100. As an example, when the pressure inside the container 100 increases and becomes greater than the elasticity of the spring of the spring portion 220, the explosion-proof panel 200, specifically the cover portion 210, may be opened.

As the gas inside the container 100 is sufficiently discharged, the pressure difference inside and outside the container 100 may be reduced. At this time, as the spring portion 220 is restored, the cover portion 210 may be closed again to block the inside and outside of the container 100.

The gas tank 300 that releases inert gas into the container 100 when the pressure inside the container 100 is lower than the pressure outside the container 100 may be arranged on the surface of the cover portion 210 facing the inside of the container 100, that is, the bottom surface of the cover portion 210.

The spring portion 220 may connect the container 100 to the cover portion 210. As an alternative embodiment, the spring portion 220 may connect the cover portion 210 and the wall portion 230 to the container 100. In other words, the spring portion 220 may fix the cover portion 210 and the wall portion 230 to the container 100.

The spring portion 220 may extend in a direction perpendicular to the surface of the cover portion 210, that is, in the thickness direction of the wall of the container 100, and may connect the container 100 to the cover portion 210.

The spring portion 220 may be arranged at the edge of the cover portion 210 covering one region of the container 100. As an example, when the cover portion 210 has a quadrilateral shape, the spring portion 220 may be arranged at the corner of the cover portion 210. Four spring portions 220 arranged at four corners of the cover portion 210 are illustrated, but this is only an example, and at least one spring portion 220 may be provided.

Gas may be generated due to an occurrence of an event such as a fire in the battery cells 111 accommodated in the container 100, and the pressure inside the container 100 may become higher than the pressure outside the container 100. At this time, when the gas pressure inside the container 100 becomes greater than the elasticity of the spring of the spring portion 220, the cover portion 210 that has blocked the inside and outside of the container 100 may be lifted toward the outside of the container 100. That is, the spring of the spring portion 220 may lift the cover portion 210 when the pressure inside the container 100 is higher than the pressure outside the container 100.

As the gas inside the container 100 is discharged and the pressure difference inside and outside the container 100 is reduced, the spring of the spring portion 220 that has been stretched may be gradually restored. Due to the restoration of the spring portion 220, the cover portion 210 may come into contact with the outer surface of the container 100 again to thereby block the inside and outside of the container 100. This may prevent oxygen outside the container 100 from flowing into the container 100, thereby preventing secondary accidents.

The wall portion 230 may be connected to the spring portion 220 and may be formed to surround the gas tank 300. As an example, the wall portion 230 may have a frame corresponding to the edge of the cover portion 210. That is, the gas tank 300 may be located inside the frame of the wall portion 230. Due to this, the gas tank 300 may be protected.

The wall portion 230 may have a thickness in a direction perpendicular to the surface of the cover portion 210 so as to protect the gas tank 300. As an example, the thickness of the wall portion 230 may correspond to the thickness of the wall of the container 100.

The gas tank 300 may be arranged on the surface of the cover portion 210 of the explosion-proof panel 200 facing the inside of the container 100, that is, on the bottom surface of the cover portion 210. When the pressure inside the container 100 is lower than the pressure outside the container 100, the gas tank 300 may release inert gas into the container 100.

Gas generated due to an occurrence of an event such as thermal runaway in the battery cell 111 accommodated in the container 100 may be discharged to the outside of the container 100 when the cover portion 210 of the explosion-proof panel 200 is opened. However, when a fire in the battery cell 111 is in progress even after the gas inside the container 100 is discharged and the cover portion 210 is closed again, the negative pressure phenomenon may occur in which the pressure inside the container 100 becomes lower than the pressure outside the container 100 while oxygen inside the container 100 is consumed. This negative pressure phenomenon may damage the container 100, and oxygen from outside the container 100 may flow into the damaged container 100, which worsens a fire situation.

The gas tank 300 is installed inside the container 100. When the pressure inside the container 100 becomes lower than the pressure outside the container 100, the gas tank 300 releases inert gas into the container 100 to balance the pressure inside and outside the container 100. That is, by releasing the inert gas into the container 100 when the negative pressure phenomenon occurs in the container 100, the gas tank 300 may prevent damage to the container 100 and prevent backdraft.

The inert gas does not react with a material inside the battery cell 111 and may not further promote fire. As an example, the inert gas may be nitrogen gas. As an example, nitrogen gas of 5 bar to 20 bar may be stored in the gas tank 300.

The gas tank 300 may include a tank portion 310 that stores the inert gas and a vent portion 320 that releases the inert gas into the container 100.

The tank portion 310 may store the inert gas. The vent portion 320 may be formed on a portion of the surface of the tank portion 310 facing the inside of the container 100. Hereinafter, the vent portion 320 is described in more detail.

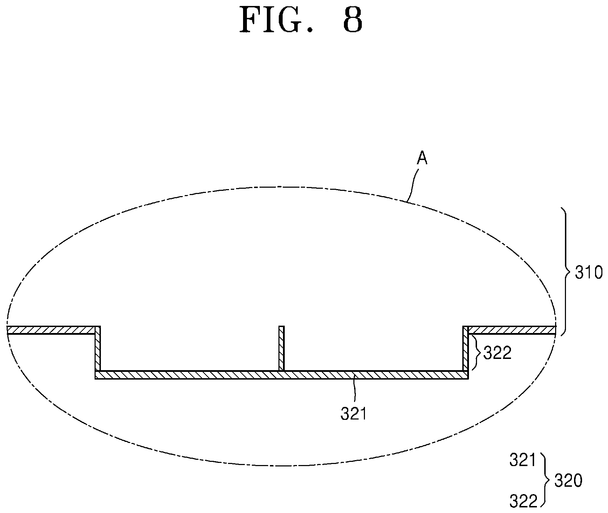

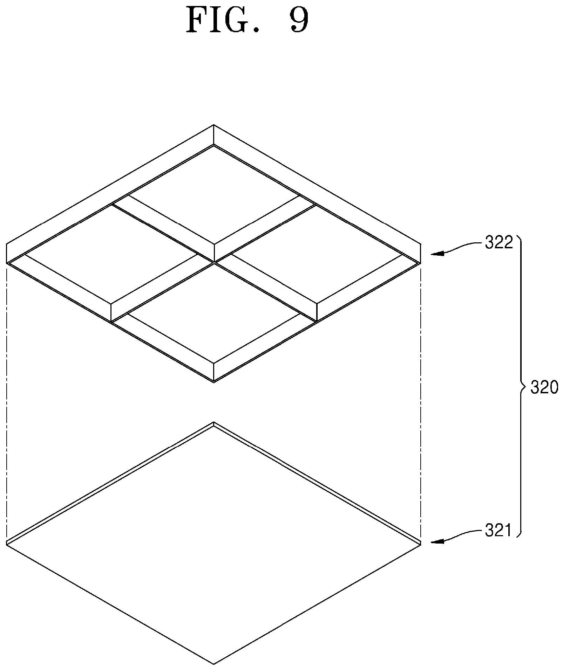

FIG. 8 is an enlarged view of cross-sectional area A, indicated in FIG. 5, and FIG. 9 is an exploded perspective view of an example vent portion according to some embodiments.

The vent portion 320 may be formed on a portion of the surface of the gas tank 300 facing the inside of the container 100. The inert gas inside the gas tank 300 may be released into the container 100 through the vent portion 320.

The vent portion 320 may operate when the pressure inside the container 100 is lower than the pressure outside the container 100. That is, when the negative pressure phenomenon occurs in the container 100, the vent portion 320 may rupture.

The vent portion 320 may include a rupture membrane 321 connected to the inside of the container 100 and a frame portion 322 located between the tank portion 310 and the rupture membrane 321.

The rupture membrane 321 may be a thin plate that acts as a block between the gas tank 300 and the inside of the container 100. As an example, the rupture membrane 321 may be a metal thin plate, particularly a stainless steel thin plate.

The rupture membrane 321 may be formed from the vent portion 320 toward the inside of the container 100. The rupture membrane 321 may rupture when the pressure inside the container 100 is lower than the pressure outside the container 100. At this time, the inert gas stored in the tank portion 310 of the gas tank 300 may be released into the container 100.

The frame portion 322 may be located between the rupture membrane 321 and the tank portion 310. The frame portion 322 may include a frame forming a grid pattern between the tank portion 310 and the rupture membrane 321 so that the rupture direction of the rupture membrane 321 when the rupture membrane 321 ruptures does not face the tank portion 310.

That is, since the pattern of the frame portion 322 is formed across at least a portion of the rupture membrane 321 between the rupture membrane 321 and the tank portion 310, the rupture membrane 321 does not rupture due to the pattern of the frame portion 322 when the pressure inside the container 100 is higher than the pressure outside the container 100, but the rupture membrane 321 may rupture when the pressure inside the container 100 is lower than the pressure outside the container 100.

The frame of the frame portion 322 may be formed to a certain thickness in the thickness direction of the gas tank 300. The frame of the frame portion 322 may form various patterns. For example, the frame of the frame portion 322 may have a grid pattern, a grating pattern, etc. The frame pattern of the frame portion 322 may be formed across at least the rupture membrane 321 so that the rupture direction of the rupture membrane 321 does not face the tank portion 310.

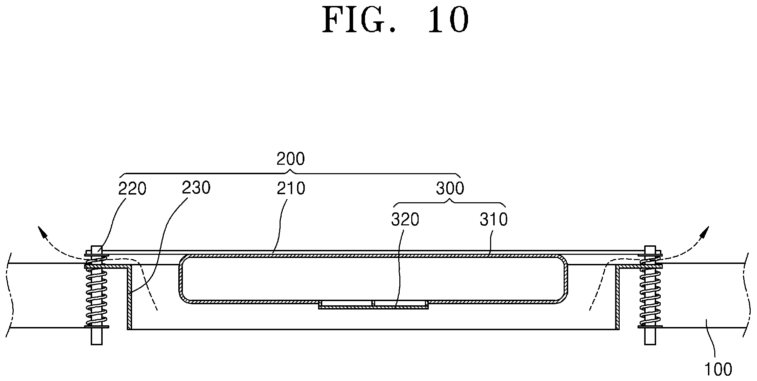

FIG. 10 is a cross-sectional view of a cross-section taken along I-I', indicated in FIG. 1, at an early stage of a fire in the ESS.

Hereinafter, a description is given of an example operation mechanism of the fire extinguishing system of the ESS 1 when gas is generated due to an occurrence of an event such as a fire or explosion in the battery cell 111 inside the container 100 of the ESS 1.

The battery cells 111 are accommodated in the container 100, and the explosion-proof panel 200 that may be opened or closed according to the pressure difference inside and outside the container 100 may be arranged on a portion of the wall of the container 100.

The explosion-proof panel 200 is normally closed to block the inside and outside of the container 100, but when gas is generated due to an occurrence of an event such as thermal runaway in the battery cells 111 accommodated inside the container 100, the pressure inside the container 100 may increase, and thus, the spring portion 220 of the explosion-proof panel 200 may open the explosion-proof panel 200 by lifting the cover portion 210 to the outside of the container 100. As an example, the pressure inside the container 100 may be higher than the pressure outside the container 100 by 0.05 bar or more.

The cover portion 210 may be lifted so that the gas inside the container 100 may be released between the cover portion 210 and the outer wall surface of the container 100. As the gas inside the container 100 is released and the pressure inside the container 100 is gradually lowered, the spring of the spring portion 220 may be restored and the cover portion 210 may be closed again. When the cover portion 210 is closed, the inflow of oxygen into the container 100 may be blocked.

When the cover portion 210 is closed, the inside and outside of the container 100 are blocked from each other. However, when a fire in the battery cell 111 is still in progress, oxygen inside the container 100 may be exhausted and the pressure inside the container 100 may become lower than the pressure outside the container 100. As an example, the pressure inside the container 100 may be less than the pressure outside the container 100 by 0.1 bar or more.

As such, when the negative pressure phenomenon occurs in the container 100, the inert gas stored in the gas tank 300 located on the bottom surface of the cover portion 210 may be released into the container 100, and thus, the negative pressure phenomenon in the container 100 may be solved. The vent portion 320 of the gas tank 300 may rupture when the pressure inside the container 100 is lower than the pressure outside the container 100. As an example, the rupture membrane 321 of the vent portion 320 may rupture when the negative pressure inside the container 100 is 0.05 bar to 0.2 bar.

Since the oxygen concentration inside the container 100 is reduced by releasing the inert gas into the container 100, the fire extinguishing capability of the ESS 1 may be improved. Since the negative pressure phenomenon in the container 100 is solved, it is possible to prevent oxygen from being introduced due to damage to the container 100. Due to this, it is possible to prevent, mitigate, or avoid the possibility of backdraft that may occur due to the rapid inflow of oxygen into the container 100 during follow-up measures and the worsened fire situation inside the container 100.

Since the inert gas is released into the container 100 when the pressure inside the container 100 becomes lower than the pressure outside the container 100, the effect of extinguishing a fire in the battery cell 111 may be improved and secondary accident damage may be mitigated, thereby preventing large-scale fire accidents and reducing the cost of follow-up measures.

According to embodiments, when a fire occurs in an ESS 1, internal gas may be discharged, the inflow of oxygen may be prevented, and negative pressure may be solved, thereby preventing secondary accidents.

However, the effects that may be obtained through the disclosure are not limited to those described above, and other technical effects that are not mentioned herein will be clearly understood from the description by those of ordinary skill in the art.

As used herein, the term "and/or" includes any and all combinations of one or more of the associated listed items. Expressions such as "at least one of," when preceding a list of elements, modify the entire list of elements and do not modify the individual elements of the list.

In addition, the terms "comprise or include" and/or "comprising or including" as used in the present application specify the presence of the stated figures, numbers, steps, operations, members, elements, and/or groups thereof, but do not preclude the presence or addition of one or more other figures, numbers, steps, operations, members, elements, and/or groups thereof. In addition, when describing the embodiments, the terms "can" and "may" as used herein may include "one or more embodiments."

In addition, in order to help the understanding of the disclosure, the accompanying drawings are not drawn to scale and the dimensions of some elements may be exaggerated. Furthermore, the same reference numbers may be assigned to the same elements in different embodiments.

The expression that two comparison targets are "the same" means that they are "substantially the same." Therefore, the expression "substantial the same" may include deviations that are considered low in the art, for example, deviations less than 5 %. In addition, the expression that "parameters are uniform over a given region" may mean that parameters are uniform from an average viewpoint.

It will be understood that although "first," "second," etc. may be used herein to describe various elements, these elements should not be limited by these terms. These terms are only used to distinguish one element from another, and it will be understood that a first element may also be a second element unless otherwise specifically stated.

Throughout the specification, each element may be singular or plural unless otherwise specifically stated.

The expression "any configuration is disposed "above (or below)" an element or "on (or under)" an element may mean that any configuration is disposed in contact with the upper surface (or lower surface) of the element, and may also mean that other configurations may be disposed between the element and any configuration disposed on (or under) the element.

It will be understood that when an element is referred to as being "connected to," "coupled to," or "in contact with" another element, the element may be "directly connected to," "directly coupled to," or in direct contact with" the other element, or may be "connected to," "coupled to," or "in contact with" the other element with another element therebetween or through another element. In addition, it will be understood that when a portion is referred to as being "electrically coupled to" another element portion, the portion may be directly coupled to the other portion, or may be coupled to the other portion with an intervening element therebetween.

Throughout the disclosure, the expression "A and/or B" indicates only A, only B, or both A and B unless otherwise stated. As used herein, the term "and/or" includes any and all combinations of one or more of the associated listed items. The expression "C to D" indicates "C or more and D or less" unless otherwise stated.

The terminology as used herein is for the purpose of describing embodiments and is not intended to limit the disclosure.

It should be understood that the disclosure is not limited to only the embodiments described herein but is also intended to cover various modifications and equivalent arrangements included within the present disclosure and the equivalent scope of the appended claims.

## Claims

1. An energy storage system comprising:
a container configured to accommodate a plurality of battery modules; and
an explosion-proof panel arranged on one surface of the container and configured to seal the container,
wherein the explosion-proof panel comprises a gas tank configured to release inert gas into the container when a pressure inside the container is lower than a pressure outside the container.

2. The energy storage system of claim 1, wherein the gas tank comprises:
a vent portion configured to operate when the pressure inside the container is lower than the pressure outside the container, and
a tank portion configured to store the inert gas.

3. The energy storage system of claim 2, wherein the vent portion comprises:
a rupture membrane connected to an inside of the container, and
a frame portion located between the tank portion and the rupture membrane.

4. The energy storage system of claim 3, wherein the frame portion comprises a frame forming a grid pattern between the tank portion and the rupture membrane so that a rupture direction of the rupture membrane, when the rupture membrane ruptures, does not face the tank portion.

5. The energy storage system of any preceding claim, wherein the explosion-proof panel is opened or closed according to the pressure inside the container.

6. The energy storage system of claim 5, wherein the explosion-proof panel is opened when the pressure inside the container is higher than the pressure outside the container.

7. The energy storage system of any preceding claim, wherein
the explosion-proof panel further comprises a cover portion and a spring portion, and
the spring portion is configured to connect the container to the cover portion.

8. The energy storage system of claim 7, wherein the gas tank is arranged on a bottom surface of the cover portion.

9. The energy storage system of claim 7 or 8, wherein
the explosion-proof panel further comprises a wall portion connected to the spring portion, and
the wall portion surrounds the gas tank.

10. An energy storage system comprising:
a container configured to accommodate a plurality of battery modules; and
an explosion-proof panel arranged on one surface of the container,
wherein the explosion-proof panel comprises a cover portion, a spring portion arranged at an edge of the cover portion, and a gas tank arranged on a bottom surface of the cover portion.

11. The energy storage system of claim 10, wherein the gas tank is configured to release inert gas into the container.

12. The energy storage system of claim 11, wherein the gas tank is further configured to release the inert gas when a pressure inside the container is lower than a pressure outside the container.

13. The energy storage system of claim 11 or 12, wherein the gas tank comprises a vent portion configured to operate when the pressure inside the container is lower than the pressure outside the container and a tank portion configured to store the inert gas.

14. The energy storage system of any one of claims 10 to 13, wherein the explosion-proof panel is opened or closed according to the pressure inside the container.

15. The energy storage system of any one of claims 10 to 14, wherein
the explosion-proof panel further comprises a wall portion connected to the gas tank, and
the spring portion is configured to connect the wall portion and the cover portion to the container.
